# EUROPEAN PATENT SPECIFICATION

(11) **EP 4 044 718 B1**
(45) Date of publication and mention of the grant of the patent: **03.12.2025**
(21) Application number: 19948753.9
(22) Date of filing: 11.10.2019
(51) Int. Cl.: H04W 74/0836, H04W 74/0833

(54) **TERMINAL AND COMMUNICATION METHOD**
ENDGERÄT UND KOMMUNIKATIONSVERFAHREN
TERMINAL ET PROCÉDÉ DE COMMUNICATION

(43) Date of publication of application: 17.08.2022
(73) Proprietor: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/040341
(87) International publication number: WO 2021/070397

(56) References cited:
- EP-A1- 3 780 856
- VIVO: "Discussion on channel structure for 2-step RACH", vol. RAN WG1, no. Chongqing, China; 20191014 - 20191020, 4 October 2019 (2019-10-04), XP051808101, Retrieved from the Internet <URL:https://ftp.3gpp.org/tsg_ran/WG1_RL1/TSGR1_98b/Docs/R1-1910198.zip R1-1910198_Discussion on channel structure for 2-step RACH.docx> [retrieved on 20191004]
- NTT DOCOMO ET AL: "Discussion on Channel Structure for Two-Step RACH", vol. RAN WG1, no. Prague, CZ; 20190826 - 20190830, 16 August 2019 (2019-08-16), XP051765777, Retrieved from the Internet <URL:http://www.3gpp.org/ftp/tsg_ran/WG1_RL1/TSGR1_98/Docs/R1-1909172.zip> [retrieved on 20190816]
- NOKIA ET AL: "Considerations on 2-step RACH channel structure", vol. RAN WG1, no. Chongqing, China; 20191014 - 20191018, 4 October 2019 (2019-10-04), XP051808651, Retrieved from the Internet <URL:https://ftp.3gpp.org/tsg_ran/WG1_RL1/TSGR1_98b/Docs/R1-1910688.zip R1-1910688 On 2-Step RACH Channel Structure Final.docx> [retrieved on 20191004]
- ZTE: "Summary of Channel Structure for Two-step RACH", vol. RAN WG1, no. Prague, CZ; 20190826 - 20190830, 3 September 2019 (2019-09-03), XP051766080, Retrieved from the Internet <URL:http://www.3gpp.org/ftp/tsg_ran/WG1_RL1/TSGR1_98/Docs/R1-1909478.zip> [retrieved on 20190903]
- FUJITSU: "Discussion on channel structure for 2- step RACH", 3GPP TSG RAN WG1 #98B, R1-1910126, 4 October 2019 (2019-10-04), pages 1 - 4, XP051788933
- ZTE ET AL.: "Remaining issues of msgA channel structure", 3GPP TSG RAN WG1 #98B, R1-1910002, 4 October 2019 (2019-10-04), pages 1 - 26, XP051788809
- NTT DOCOMO, INC.: "Discussion on Channel Structure for Two-Step RACH", 3GPP TSG RAN WG1 #98B, R1-1911155, 5 October 2019 (2019-10-05), pages 1 - 4, XP051789928
- ZTE: "FL Summary #2 of Channel Structure for Two- step RACH", 3GPP TSG RAN WG1 #98, R1-1909860, 3 September 2019 (2019-09-03), pages 1 - 38, XP051766452
- NTT DOCOMO, INC.: "Discussion on Channel Structure for Two-Step RACH", 3GPP TSG RAN WG1 #99, R1-1912869, 8 November 2019 (2019-11-08), pages 1 - 6, XP051820217

## Description

### TECHNICAL FIELD

The present invention relates to a terminal and a communication method in a wireless communication system.

### BACKGROUND ART

In NR (New Radio) (also referred to as "5G") that is a successor system to LTE (Long Term Evolution), technologies are investigated to satisfy the requirements of high capacity systems, high data transmission rates, low delays, simultaneous connections of multiple terminals, low costs, power saving, and the like (for example, Document 1).

NR performs random access for synchronization establishment or scheduling requests between terminals and base stations as well as LTE. There are two types of random access procedures: CBRA (Contention based random access) and non-contention random access (CFRA (Contention free random access) (for example, Document 2).

Document 3 describes rules for mapping the PRACH occasion(s) of a two-step RACH procedure (e.g., MsgA PRACH occasion(s)) and the PUSCH occasion(s) of the two-step RACH procedure (e.g., MsgA PUSCH occasion(s)). A PUSCH occasion (e.g., a MsgA PUSCH occasion) may be invalid, if one or more symbols of the PUSCH occasion (e.g., the MsgA PUSCH occasion) overlap with a PRACH occasion (e.g., MsgA PRACH occasion). Document 4 describes channel structure for 2-step RACH. It is proposed that UE transmits msgA PRACH or msgA PUSCH when either PRACH occasion or the corresponding PUSCH occasion is valid.

Document 4 describes channel structure for two-step RACH. It is discussed whether or not the validation rule for MsgA PUSCH occasion based on location of MsgA RACH occasion is defined.

### PRIOR ART DOCUMENTS

Document 1: 3GPP TS 38.300 V15.5.0(2019-03)
Document 2: 3GPP TR 38.321 V15.7.0(2019-09)
Document 3: EP 3 780 856 A1, cited under Art. 54(3) EPC;
Document 4: VIVO: "Discussion on channel structure for 2-step RACH", 3GPP DRAFT; R1-1910198;
Document 5: NTT DOCOMO et al.: "Discussion on Channel Structure for Two-Step RACH"; 3GPP DRAFT; R1-1909172;

### SUMMARY OF THE INVENTION

### PROBLEM TO BE SOLVED BY THE INVENTION

In the contention-based random access procedure of the NR wireless communication system, a two-step random access procedure using MsgA and MsgB is being discussed in addition to the conventional four-step random access procedure. In the two-step random access procedure, as to the terminal and the base station, an occasion to transmit the MsgA PRACH (Physical Random Access Channel) and an occasion to transmit PUSCH (Physical Uplink Shared Channel) except for the random access preamble of MsgA are associated with each other.

However, for example, when the PRACH transmission occasions overlap partially or entirely with the downlink or SSB (SS/PBCH block) in the time domain, the PRACH transmission occasions are assumed to be invalid and not used. In this case, the relationship between PRACH transmission occasions and PUSCH transmission occasions need to be changed appropriately.

The present invention has been made in view of the above-described points, and it is an object of the present invention to determine resources used for the two-step random access procedure in a wireless communication system.

### MEANS FOR SOLVING THE PROBLEM

This object is accomplished by the subject-matter of the independent claims. The dependent claims concern particular embodiments.

### EFFECT OF THE INVENTION

According to the disclosed technique, in a wireless communication system, the resources used for the two-step random access procedure can be determined.

### BRIEF DESCRIPTION OF THE DRAWINGS

FIG. 1 is a diagram illustrating an example of a configuration of a wireless communication system according to an embodiment of the present invention;
FIG. 2 is a sequence diagram for explaining an example of a four-step random access procedure;
Fig. 3 is a sequence diagram illustrating an example of a two-step random access procedure;
FIG. 4 is a diagram showing an example of a resource arrangement (1) of a two-step random access procedure according to an embodiment of the present invention;
FIG. 5A is a diagram showing an example (2) of a resource arrangement of a two-step random access procedure according to an embodiment of the present invention;
FIG. 5B is a diagram showing an example of a resource arrangement (3) of a two-step random access procedure according to an embodiment of the present invention;
FIG. 6A is a diagram showing an example of a resource arrangement (4) of a two-step random access procedure according to an embodiment of the present invention;
FIG. 6B is a diagram showing an example of a resource arrangement (5) of a two-step random access procedure according to an embodiment of the present invention;
FIG. 6C is a diagram showing an example of a resource arrangement (6) of a two-step random access procedure according to an embodiment of the present invention;
FIG. 7 is a diagram showing an example of a resource arrangement (7) of a two-step random access procedure according to an embodiment of the present invention;
FIG. 8 is a diagram showing an example of a functional configuration of a base station 10 according to an embodiment of the present invention;
FIG. 9 is a diagram showing an example of a functional configuration of a terminal 20 according to an embodiment of the present invention; and
FIG. 10 is a diagram showing an example of a hardware configuration of a base station 10 or a terminal 20 according to an embodiment of the present invention.

### EMBODIMENTS FOR CARRYING OUT THE INVENTION

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, conventional techniques are appropriately used. However, the conventional technique is, for example, a conventional LTE, but is not limited to a conventional LTE. The term "LTE" used herein has a broad meaning, including LTE-Advanced and a mode after LTE-Advanced (for example, NR), unless particularly indicated.

Embodiments of the present invention described below use the terms SS (Synchronization Signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), and the like used in conventional LTEs. This is for convenience of reference, and similar signals, functions, and the like may be referred to as other names. The above terms in NR correspond to NR-SS, NR-PSS, NR-SSS, NR-PBCH, NR-PRACH, and the like. However, even the signal used for NR is not necessarily specified as "NR-."

In the embodiments of the present invention, the duplexing method may be TDD (Time Division Duplexing), FDD (Frequency Division Duplexing), or any other method (for example, Flexible Duplexing and the like).

Further, in the embodiments of the present invention, that a wireless parameter and the like is "configured" means that a predetermined value may be preliminarily set (Pre-configured) or that a wireless parameter indicated by a base station 10 or a terminal 20 may be set.

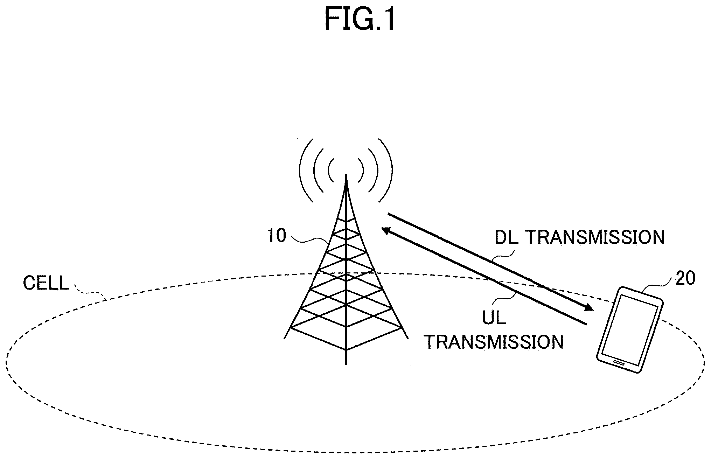

FIG. 1 is a diagram illustrating a wireless communication system according to an embodiment of the present invention. The wireless communication system in an embodiment of the present invention includes a base station 10 and a terminal 20, as shown in FIG. 1. In FIG. 1, one base station 10 and one terminal 20 are shown, but this is an example and may be each more than one.

The base station 10 is a communication device that provides one or more cells and performs wireless communication with the terminal 20. The physical resource of a radio signal is defined by a time domain and a frequency domain, the time domain may be defined by a number of OFDM symbols, and the frequency domain may be defined by a number of sub-carriers or a number of resource blocks. The base station 10 transmits synchronization signals and system information to the terminal 20. The synchronization signals are, for example, NR-PSS and NR-SSS. System information is transmitted, for example, by NR-PBCH and is also referred to as indication information. As shown in FIG. 1, the base station 10 transmits a control signal or data to the terminal 20 by DL (Downlink) and receives a control signal or data by UL (Uplink) from the terminal 20. Both the base station 10 and the terminal 20 can transmit and receive signals using beam forming. Both the base station 10 and the terminal 20 can also apply MIMO (Multiple Input Multiple Output) communications to the DL or UL. Both the base station 10 and the terminal 20 may also communicate via a secondary cell (SCell) and a primary cell (PCell) by a CA (Carrier Aggregation). In addition, the terminal 20 may communicate via the primary cell of the base station 10 and a primary secondary cell of another base station 10 by a DC (Dual Connectivity).

The terminal 20 is a communication device with a wireless communication function, such as a smartphone, a cellular phone, a tablet, a wearable terminal, and a communication module for M2M (Machine-to-Machine). As shown in FIG. 1, the terminal 20 utilizes various communication services provided by a wireless communication system by receiving control signals or data at DL from the base station 10 and transmitting control signals or data at UL to the base station 10.

Here, in a random access procedure performed for a synchronization establishment or scheduling request between the terminal 20 and the base station 10, for example, the terminal 20 transmits a random access preamble or UE (User Equipment) identifier to the base station 10 as a UL signal, and the base station 10 transmits information for performing random access response and collision resolution as a DL signal to the terminal 20.

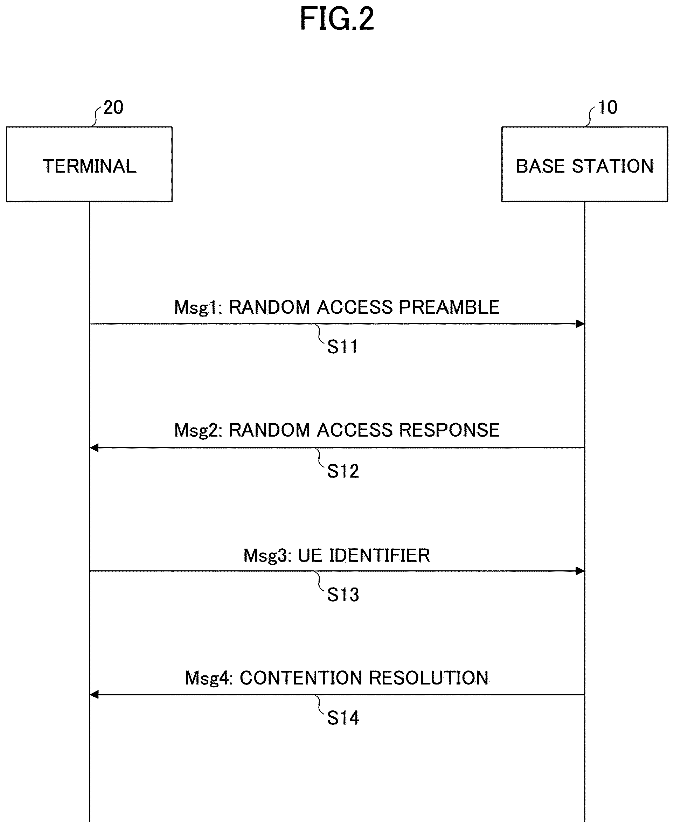

FIG. 2 is a sequence diagram for illustrating an example of a four-step random access procedure. An example of the random access procedure shown in FIG. 2 is a four-step random access procedure of a collision type (contention based). In step S11, the terminal 20 transmits a random access preamble as Msg1 to the base station 10. Subsequently, the base station 10 transmits a random access response as Msg2 to the terminal 20 (S12). Subsequently, the terminal 20 transmits the UE identifier as Msg3 to the base station 10 (S13). Subsequently, the base station 10 transmits information for performing the collision resolution as Msg4 to the terminal 20 (S14). If the collision resolution is successful, the random access procedure is successfully completed.

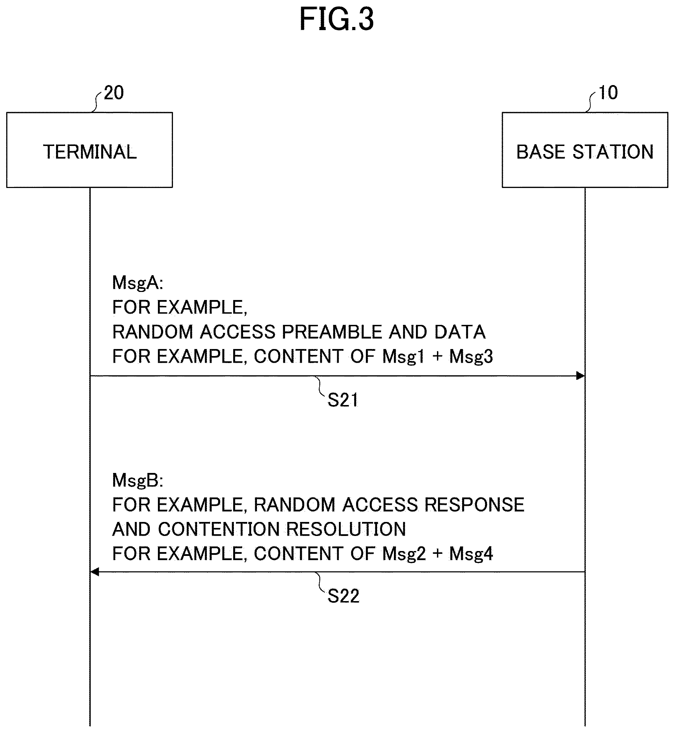

FIG. 3 is a sequence diagram for illustrating an example of a two-step random access procedure. An example of a random access procedure shown in FIG. 3 is a colliding two-step random access procedure. A two-step random access procedure has been discussed to complete the random access procedure in a short period of time. In step S21, the terminal 20 transmits data via random access preamble and PUSCH via PRACH as MsgA to the base station 10. For example, content corresponding to Msg1 and Msg3 in a four-step random access procedure may be transmitted via PUSCH. Subsequently, the base station 10 transmits information for random access response and crash resolution as MsgB to the terminal 20 (S22). For example, MsgB may include content corresponding to Msg2 and Msg4 in a four-step random access procedure. If the collision resolution is successful, the random access procedure is successfully completed. The adoption of a two-step random access procedure is expected to achieve low delay and reduced power consumption.

It should be noted that the four-step random access procedure and the two-step random access procedure may perform random access of a non-contention type (contention free), for example, by assigning a random access preamble from the base station 10 to the terminal 20.

The details of MsgA in the two-step random access procedure are being discussed. For example, MsgA is comprised of a random access preamble and PUSCH. It is assumed that the random access preamble and PUSCH are not a single resource at least in the physical layer. For example, it is assumed that the random access preamble and PUSCH separated from each other as physical resources are defined as MsgA.

That is, the MsgA-PUSCH transmission occasion (MsgA PUSCH location) may be defined as one MsgA-PUSCH resource. Similarly, the MsgA-PRACH transmission occasion (MsgA PRACH location) may be defined as a resource to send one MsgA-preamble. Hereinafter, "MsgA-PUSCH Transmission Occasion" is also described as "MsgA-PO" and "MsgA-PRACH Transmission Occasion" is also described as "MsgA-RO."

A mapping relationship between MsgA-PUSCH transmission occasions and MsgA-PRACH transmission occasions has been discussed. The correspondence relationship may, for example, be: one MsgA-PRACH transmission occasion for one MsgA-PUSCH transmission occasion; one MsgA-PRACH transmission occasion for multiple MsgA-PUSCH transmission occasions; or multiple MsgA-PRACH transmission occasions for multiple MsgA-PUSCH transmission occasions. The terminal 20 identifies the MsgA-PRACH transmission occasion and the MsgA-PUSCH transmission occasion and transmits MsgA to the base station 10.

As a method of indicating the resource position in the time domain of the MsgA-PUSCH transmission occasion, when the configuration period of the MsgA-PRACH transmission occasion is the same as that of the MsgA-PRACH transmission occasion, it has been discussed to indicate the resource position in the time domain of the MsgA-PUSCH slot using a time offset from the start position of the MsgA-PRACH slot. The MsgA-PRACH slot is a slot that includes MsgA-PRACH transmission occasions. The MsgA-PUSCH slot is a slot that includes MsgA-PUSCH transmission occasions. The base station 10 indicates, to the terminal 20, information indicating a position of the MsgA-PRACH slot in the time domain and information indicating a position of the MsgA-PUSCH slot in the time domain.

Here, regarding the MsgA-RO, a MsgA-RO is invalidated (invalid) and is not expected to be used if the PRACH transmission occasion overlaps partially or fully with the downlink or SSB (SS/PBCH block) in the time domain. In this case, operations related to a MsgA-PO associated with the invalidated MsgA-RO must be defined appropriately. Hereinafter, "downlink" may be a DL part specified by the TDD configuration.

In addition, when a MsgA-PO and a MsgA-RO overlap with each other partially or entirely in the time domain, and when the MsgA-PO and the MsgA-RO have a corresponding relationship, that is, when the terminal 20 that transmits PRACH in the MsgA-RO transmits PUSCH in the MsgA-PO, it is undesirable that the terminal 20 transmits the PRACH and the PUSCH simultaneously from the viewpoint of the complexity of the terminal 20 or the PSD (Power Spectral Density).

In addition, when a MsgA-PO and a MsgA-RO overlap with each other partially or entirely in the time domain and when the MsgA-PO and the MsgA-RO do not have a corresponding relationship, in a case where analog beam forming is used on the base station 10 side, the base station 10 cannot receive PRACH and PUSCH using appropriate reception beams. That is, the base station 10 can receive only either PRACH or PUSCH using an appropriate reception beam.

Thus, if a MsgA-RO, with which a MsgA-PO is associated, is invalidated, the terminal 20 may also invalidate the MsgA-PO.

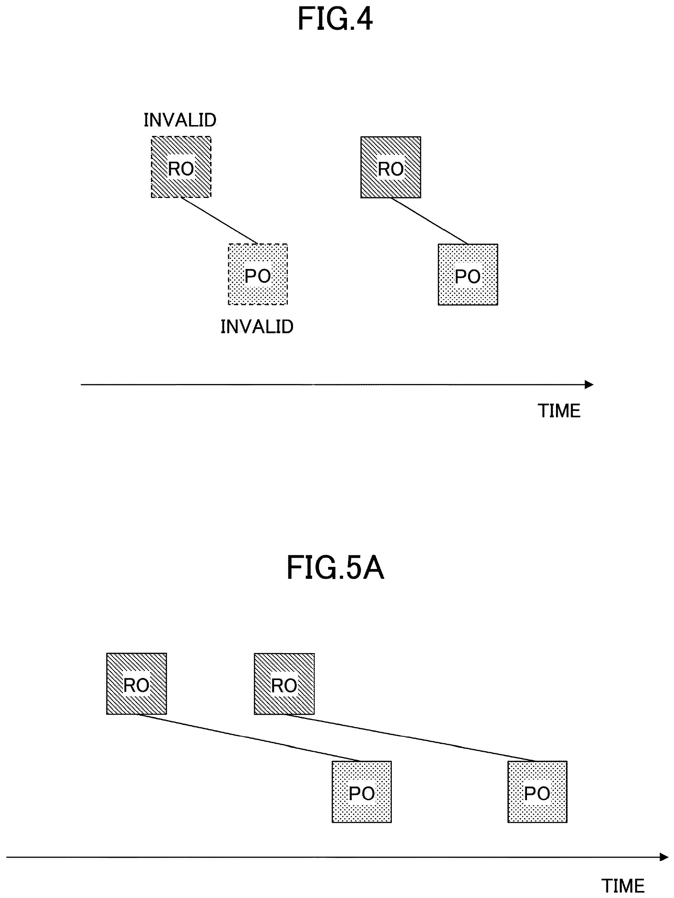

FIG. 4 is a diagram showing an example of resource arrangement (1) of a two-step random access procedure according to an embodiment of the present invention. As shown in FIG. 4, if a MsgA-RO and a MsgA-PO have a corresponding relationship, and the MsgA-RO is invalidated, the terminal 20 may also invalidate the MsgA-PO having a corresponding relationship with the MsgA-RO. The line connecting RO and PO shown in the figure indicates that RO and PO have a corresponding relationship.

Here, in FIG. 4, the correspondence between a MsgA-PO and a MsgA-RO may be determined before determining whether the MsgA-RO is invalidated.

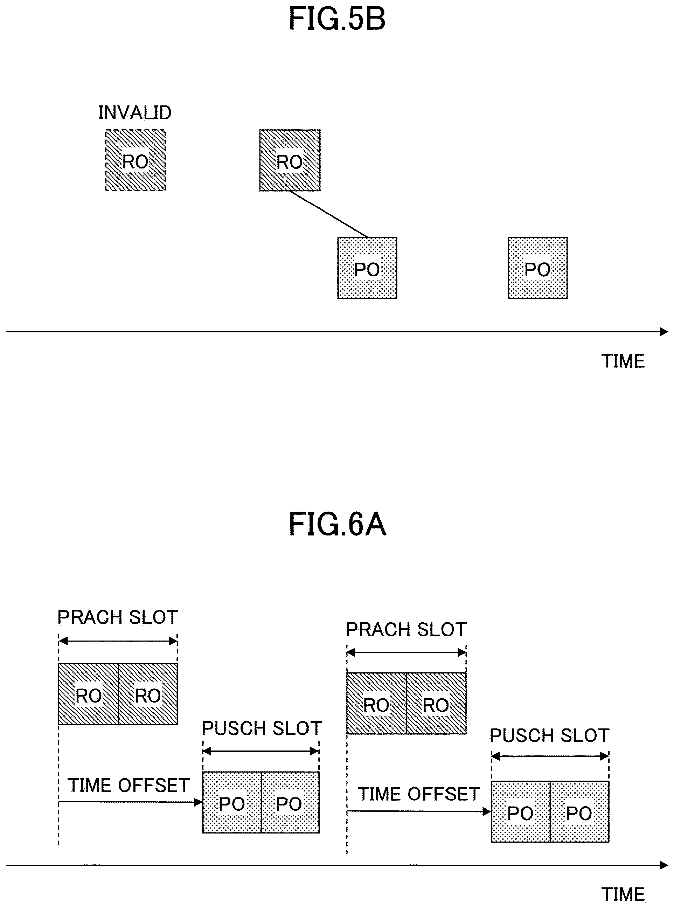

FIG. 5A illustrates an example (2) of a resource arrangement for a two-step random access procedure according to an embodiment of the present invention. FIG. 5B shows an example (3) of a resource arrangement for a two-step random access procedure according to an embodiment of the present invention.

When a MsgA-RO is invalidated, the invalidated MsgA-RO may be excluded from the target MsgA-ROs used for determining the correspondence between MsgA-ROs and MsgA-POs.

If a MsgA-RO is not invalidated, the corresponding relationship between the MsgA-RO and a MsgA-PO is determined, as shown in FIG. 5A.

On the other hand, when a MsgA-RO is invalidated, because the invalidated MsgA-RO is excluded from the target MsgA-ROs used for determining the corresponding relationship with MsgA-POs, the corresponding relationship of the MsgA-RO with a MsgA-PO need not be determined, as shown in FIG. 5B.

Here, in FIGS. 5A and 5B, the arrangement of a MsgA-PO may be performed before determining whether a MsgA-RO is invalidated, and the correspondence between the MsgA-PO and the MsgA-RO may be determined after the determination of whether MsgA-RO is invalidated.

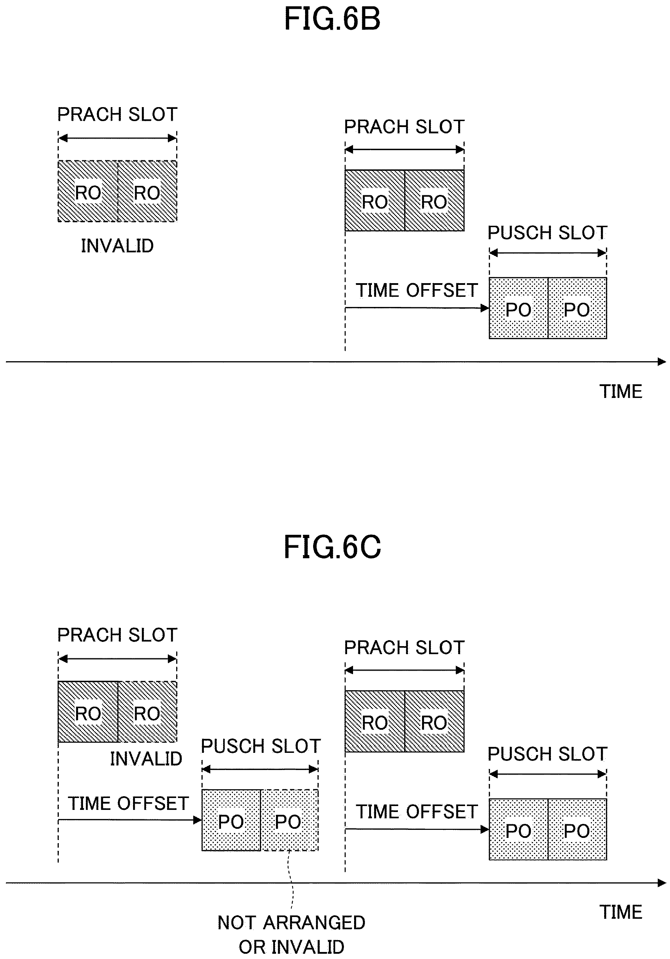

FIG. 6A illustrates an example (4) of a resource arrangement for a two-step random access procedure according to an embodiment of the present invention. FIG. 6B illustrates an example (5) of a resource arrangement for a two-step random access procedure in an embodiment of the present invention. FIG. 6C illustrates an example (6) of a resource arrangement for a two-step random access procedure in an embodiment of the present invention.

When a MsgA-RO is invalidated, the invalidated MsgA-RO may be excluded from the target MsgA-ROs used for specifying a MsgA-PUSCH slot by a time offset from the MsgA-PRACH slot.

For example, a MsgA-PRACH slot containing only the invalidated MsgA-RO need not be used for specifying a MsgA-PUSCH slot by a time offset. In addition, the MsgA-PRACH slot, which is not used for specifying a MsgA-PUSCH slot by a time offset, may be invalidated.

Alternatively, if a MsgA-PUSCH slot is specified by a time offset from a MsgA-PRACH slot containing only invalidated MsgA-ROs, the terminal 20 may consider the specified MsgA-PUSCH slot is invalidated.

When a MsgA-RO is not invalidated, a MsgA-PUSCH slot is specified by a time offset from a MsgA-PRACH slot containing the MsgA-RO, and the corresponding relationship between the MsgA-RO and a MsgA-PO is determined, as shown in FIG. 6A.

On the other hand, when MsgA-ROs are invalidated, a MsgA-PUSCH slot is not specified by a time offset from a MsgA-PRACH slot containing only invalidated MsgA-ROs. Therefore, as shown in FIG. 6B, the corresponding relationship between the MsgA-ROs and MsgA-POs is not required to be specified, and the MsgA-PRACH slot may be invalidated.

Also, when a part of MsgA-ROs in a MsgA-PRACH slot is invalidated, as shown in FIG. 6C, a MsgA-PO corresponding to the invalidated MsgA-RO among the MsgA-POs in the specified MsgA-PUSCH slot, need not be arranged or may be invalidated if the MsgA-PUSCH slot is specified based on a time offset from the MsgA-PRACH slot. When a part of MsgA-ROs in the MsgA-PRACH slot is invalidated, it is not necessary to specify a MsgA-PUSCH slot by a time offset from the MsgA-PRACH slot. Also, when a part of MsgA-ROs in the MsgA-PRACH slot is invalidated, the MsgA-PRACH slot may be invalidated. All MsgA-ROs included in the MsgA-PRACH slot that is invalidated, may be invalidated.

Here, the correspondence between MsgA-POs and MsgA-ROs may be determined after determining whether MsgA-ROs are invalidated, in FIGS. 6A, 6B, and 6C.

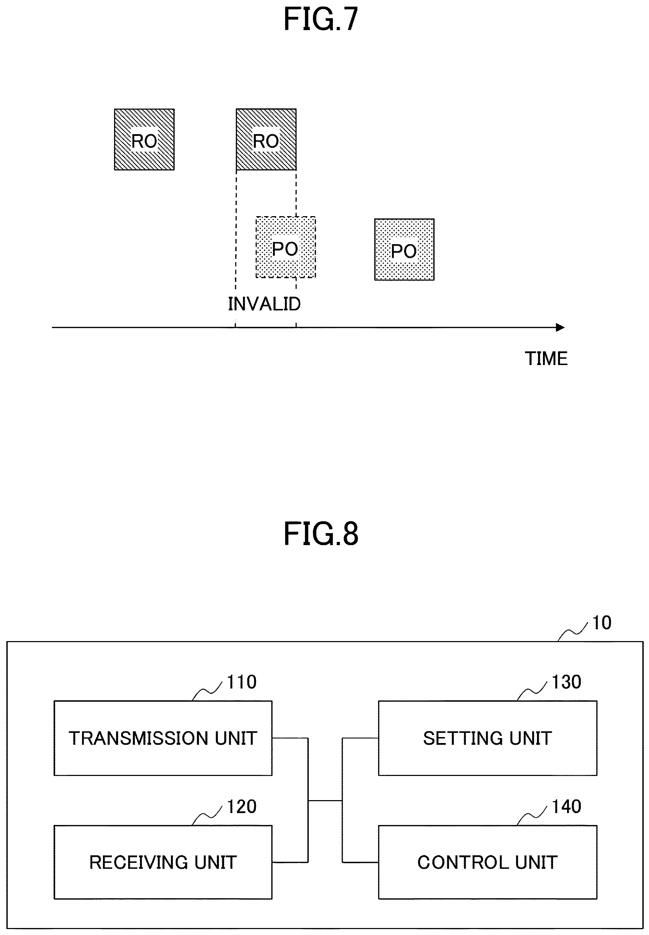

FIG. 7 is a diagram showing an example of resource arrangement (7) of a two-step random access procedure according to an embodiment of the present invention. If there is overlap between MsgA-RO and MsgA-PO in the time domain, the terminal 20 may disable either.

For example, as shown in FIG. 7, when there is an overlap between a MsgA-PO a MsgA-RO in the time domain, the terminal 20 may prioritize the MsgA-RO, and invalidate the Msg-PO.

Also, for example, when there is an overlap between a MsgA-RO and a MsgA-PO in the time domain, the terminal 20 may prioritize the one that is arranged earlier in the time domain, and invalidate the other.

Also, for example, when there is an overlap between a MsgA-RO and a MsgA-PO in the time domain, which of the MsgA-RO and the MsgA-PO should be invalidated, may be determined based on other conditions. Such other conditions may include, for example, a condition that FR2 (Frequency Range 2) is used. In addition, the other conditions may include, for example, a condition that analog beam forming is used. The other conditions may include, for example, a condition that the MsgA-RO and the MsgA-PO overlapping with each other in the time domain do not have a corresponding relationship, or the condition that the MsgA-RO and the MsgA-PO overlapping with each other in the time domain do not have a corresponding relationship, may be added to the other conditions.

It is noted that, when there is an overlap between a MsgA-RO and a MsgA-PO in the time domain, and there is an overlap in the frequency domain, the terminals 20 may invalidate one of the MsgA-RO and the MsgA-PO.

As for MsgA-PO, the MsgA-PO may be invalidated when the downlink or SSB overlaps partially or fully with the MsgA-PO in the time domain. Also, for MsgA-PO, the MsgA-PO may be invalidated when a period subsequent to the downlink or SSB partially or entirely overlaps with the MsgA-PO in the time domain. When MsgA-PO is invalidated, the MsgA-PO may be excluded from the target MsgA-POs used for determining the corresponding relationship between MsgA-RO and MsgA-PO.

The technical specifications may specify the method of resource allocation and the method of determining correspondence between MsgA-RO and MsgA-PO to ensure that there is no overlap between MsgA-RO and MsgA-PO in the time domain. Here, the assurance of no overlap in the time domain between MsgA-RO and MsgA-PO may be applied to only a case in which MsgA-RO and MsgA-PO have correspondence with each other, or may be applied to only a case in which MsgA-RO and MsgA-PO that have no correspondence with each other, or may be applied to both cases.

For example, in a case where MsgA-ROs and MsgA-POs are periodically arranged, the corresponding relationship between a MsgA-RO and a MsgA-PO may be determined for those MsgA-ROs and MsgA-POs within a certain period of time, that is, only those MsgA-ROs and MsgA-POs that are within periodically repeated periods, may have a corresponding relationship with each other. The relationship between a MsgA-RO and a MsgA-PO need not be determined in a case where the MsgA-RO and the MsgA-PO belong to different periods among the periodically repeated periods.

According to the above-described embodiment, when a MsgA-RO is invalidated, the terminal 20 can efficiently identify a MsgA-PO having a corresponding relationship with a MsgA-RO to be used, by invalidating a MsgA-PO that has a corresponding relationship with the invalidated MsgA-RO. When a MsgA-RO is invalidated, the terminal 20 can efficiently identify a MsgA-PO having a corresponding relationship with another MsgA-RO, by excluding the MsgA-RO. When a MsgA-RO is invalidated, the terminal 20 may invalidate a MsgA-PRACH slot containing the MsgA-RO so that a MsgA-PUSCH slot is not to be specified by a time offset from the MsgA-PRACH slot.

That is, in a wireless communication system, the resources used for the two-step random access procedure can be determined.

### (Equipment Configuration)

Next, a functional configuration example of the base station 10 and the terminal 20 for performing the processes and operations described above will be described. The base station 10 and the terminal 20 include functions for implementing the embodiments described above. However, each of the base station 10 and the terminal 20 may include only part of the functions in the embodiment.

### <Base Station 10>

FIG. 8 is a diagram illustrating an example of the functional configuration of the base station 10 according to an embodiment of the present invention. As shown in FIG. 8, the base station 10 includes a transmission unit 110, a receiving unit 120, a setting unit 130, and a control unit 140. The functional configuration shown in FIG. 8 is only one example. If the operation according to the embodiments of the present invention can be performed, the functional category and the name of the functional unit may be any one.

The transmission unit 110 includes a function for generating a signal to be transmitted to the terminal 20 side and transmitting the signal wirelessly. The transmission unit 110 transmits a message between network nodes to the other network nodes. The receiving unit 120 includes a function for receiving various signals transmitted from the terminal 20 and acquiring, for example, information of a higher layer from the received signals. The transmission unit 110 has a function to transmit NR-PSS, NR-SSS, NR-PBCH, DL/UL control signals, or the like to the terminal 20. The receiving unit 120 receives a message between network nodes from other network nodes.

The setting unit 130 stores the preset setting information and various setting information to be transmitted to the terminal 20. The contents of the setting information are, for example, information relating to the setting of two-step random access and the like.

The control section 140 performs control of the two-step random access as described in the embodiment. A function unit related to signal transmission in the control unit 140 may be included in the transmission unit 110, and a function unit related to signal reception in the control unit 140 may be included in the receiving unit 120.

### <Terminal 20>

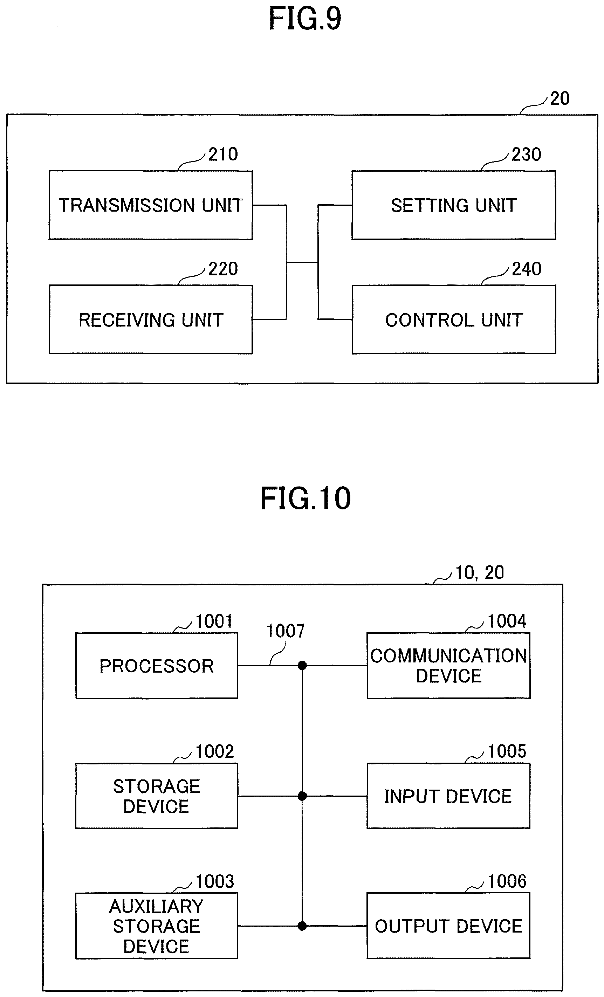

FIG. 9 is a diagram illustrating an example of a functional configuration of a terminal 20 according to an embodiment of the present invention. As shown in FIG. 9, the terminal 20 includes a transmission unit 210, a receiving unit 220, a setting unit 230, and a control unit 240. The functional configuration shown in FIG. 9 is only one example. If the operation according to the embodiments of the present invention can be performed, the functional category and the name of the functional unit may be any one.

The transmission unit 210 creates a transmission signal from the transmission data and wirelessly transmits the transmission signal. The receiving unit 220 receives various signals wirelessly and acquires signals from higher layers from the received signal of the physical layer. The receiving unit 220 has a function of receiving NR-PSS, NR-SSS, NR-PBCH, DL/UL/SL control signals or the like transmitted from the base station 10. For example, the transmission unit 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to the other terminal 20 as D2D communication, and the receiving unit 220 receives PSCCH, PSSCCH, PSDCH, PSDCH, and the like from another terminal 20.

The setting unit 230 stores various setting information received from the base station 10 by the receiving unit 220. The setting unit 230 also stores the preset setting information. The contents of the setting information are, for example, the setting of two-step random access and the like.

The control unit 240 performs control of the two-step random access as described in the embodiment. A function unit related to signal transmission in the control unit 240 may be included in the transmission unit 210, and a function unit related to signal reception in the control unit 240 may be included in the receiving unit 220.

### (Hardware configuration)

Block diagrams (FIGS. 8 and 9) used in the description of the above embodiments show blocks of functional units. These functional blocks (components) are implemented by any combination of hardware and/or software. In addition, the implementation method of each function block is not particularly limited. That is, each functional block may be implemented using a single device that is physically or logically combined, or two or more devices that are physically or logically separated may be directly or indirectly connected (for example, using wired, wireless, and the like) and implemented using these multiple devices. The functional block may be implemented by combining software with the device or the multiple devices.

Functions include, but are not limited to, judgment, decision, determination, calculation, computation, processing, derivation, research, search, verification, reception, transmission, output, access, resolution, option, selection, establishment, comparison, assumption, expectation, and deeming; broadcasting, notifying, communicating, forwarding, configuring, reconfiguring, allocating mapping, and assigning. For example, a functional block (component) that functions to transmit is referred to as a transmission unit or a transmitter. In either case, as described above, the implementation method is not particularly limited.

For example, the base station 10, terminal 20, and the like, according to an embodiment of the present disclosure may function as a computer for processing the radio communication method of the present disclosure. FIG. 10 is a diagram illustrating an example of the hardware configuration of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "apparatus" can be read as circuits, devices, units, and the like. The hardware configuration of the base station 10 and terminal 20 may be configured to include one or more of the devices shown in the figure or may be configured without some of the devices.

The functions in the base station 10 and the terminal 20 are implemented by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may be comprised of a central processing unit (CPU) including an interface with peripheral devices, a controller, an arithmetic unit, a register, and the like. For example, the above-described control unit 140, control unit 240, and the like may be implemented by the processor 1001.

The processor 1001 reads out a program (program code), software module, data, or the like from at least one of the auxiliary storage device 1003 and the communication device 1004 to the storage device 1002 and performs various processing in accordance with the above. As a program, a program that causes a computer to execute at least a part of the operation described in the above-described embodiment is used. For example, the control unit 140 of the base station 10 shown in FIG. 8 may be stored in the storage device 1002 and implemented by a control program operating in the processor 1001. For example, the control unit 240 of the terminal 20 illustrated in FIG. 9 may be stored in the storage device 1002 and implemented by a control program operating in the processor 1001. Although the foregoing processes have been described and executed by one processor 1001, they may be executed simultaneously or sequentially by two or more processors 1001. The processor 1001 may be implemented by one or more chips. The program may be transmitted from the network via a telecommunication line.

The storage device 1002 is a computer-readable recording medium and may be comprised of at least one of, for example, ROM (Read Only Memory), EPROM (Erasable Programmable ROM), EEPROM (Electrically Erasable Programmable ROM), RAM (Random Access Memory), and the like. The storage device 1002 may be referred to as a register, cache, main memory (main memory), or the like. The storage device 1002 can store programs (program codes), software modules, and the like, executable to implement a communication method according to an embodiment of the present disclosure.

The auxiliary storage device 1003 is a computer-readable recording medium and may comprise at least one of an optical disk, such as a CD-ROM (Compact Disc ROM), a hard disk drive, a flexible disk, a magneto-optical disk (for example, a compact disk, a digital versatile disk, a Blu-ray disk), a smart card, a flash memory (for example, a card, a stick, a keydrive), a floppy disk, a magnetic strip, and the like. The storage medium described above may be, for example, a database, a server, or other suitable medium that includes at least one of a storage device 1002 and an auxiliary storage device 1003.

The communication device 1004 is a hardware (transmitting/receiving device) for performing communication between computers via at least one of a wired network and a wireless network, and is also referred to as a network device, a network controller, a network card, a communication module, or the like. The communication device 1004 may comprise a high frequency switch, duplexer, filter, frequency synthesizer, or the like, for example, to implement at least one of a frequency division duplex and a time division duplex. For example, the transmitting/receiving antenna, the amplifier unit, the transceiving unit, the transmission line interface, and the like may be implemented by the communication device 1004. Transmitters and receptacles may be physically or logically isolated implementations of the transmitters and receivers.

An input device 1005 is an input device (for example, a keyboard, mouse, microphone, switch, button, sensor, and the like) that accepts external input. An output device 1006 is an output device (for example, a display, speaker, LED lamp, and the like) that implements an external output. The input device 1005 and the output device 1006 may have an integral configuration (for example, a touch panel).

Each device, such as the processor 1001 and the storage device 1002, is connected by a bus 1007 for communicating information. A bus 1007 may be constructed using a single bus or may be constructed using different buses between devices.

The base station 10 and the terminal 20 may also include hardware such as a microprocessor, a digital signal processor (DSP), an ASIC (Application Specific Integrated Circuit), a PLD (Programmable Logic Device), an FPGA (Field Programmable Gate Array), and some or all of the functional blocks may be implemented by the hardware. For example, the processor 1001 may be implemented using at least one of these pieces of hardware.

### (Summary of Embodiments)

As described above, according to an embodiment of the present invention, there is provided a terminal for changing a method for identifying the second transmission occasion when the first transmission occasion is invalidated, including: a control unit configured to identify a first transmission occasion for transmitting a message used for a two-step random access procedure via a physical random access channel and a second transmission occasion for transmitting the message in a physical uplink shared channel; and a transmission unit for transmitting the message using the first transmission occasion and the second transmission occasion, wherein the control unit changes a method of identifying the second transmission occasion when the first transmission occasion is invalidated.

With the above configuration, when a MsgA-RO is invalidated, the terminal 20 can efficiently identify a MsgA-PO having a corresponding relationship with a MsgA-RO to be used, by invalidating a MsgA-PO that has a corresponding relationship with the MsgA-RO. When a MsgA-RO is invalidated, the terminal 20 can efficiently identify a MsgA-PO having a corresponding relationship with another MsgA-RO, by excluding the MsgA-RO. When a MsgA-RO is invalidated, the terminal 20 may invalidate a MsgA-PRACH slot containing the MsgA-RO so that a MsgA-PUSCH slot is not to be specified by a time offset from the MsgA-PRACH slot. That is, in a wireless communication system, the resources used for the two-step random access procedure can be determined.

The control unit may invalidate the second transmission occasion when the first transmission occasion is invalidated. This arrangement allows the terminal 20 to efficiently identify a MsgA-PO having a corresponding relationship with a MsgA-RO to be used, by invalidating a MsgA-PO having a corresponding relationship with a MsgA-RO when the MsgA-RO is invalidated.

The first transmission occasion may be excluded from a target to be associated with the second transmission occasion if the first transmission occasion is invalidated. With this arrangement, when a MsgA-RO is invalidated, the terminal 20 can efficiently identify a MsgA-PO that has a corresponding relationship with another MsgA-RO, by excluding the MsgA-RO.

If the first transmission occasion is invalidated, the control unit may invalidate the second transmission occasion contained in a slot of the physical uplink shared channel specified by a time offset from a slot of the physical random access channel including the first transmission occasion and a valid transmission occasion. This arrangement allows the terminal 20 to efficiently identify a MsgA-PO having a corresponding relationship with a MsgA-RO to be used, by invalidating a MsgA-PO that has a corresponding relationship with the MsgA-RO.

The control unit may invalidate the first transmission occasion or the second transmission occasion, when the first transmission occasion and the second transmission occasion overlap with each other partially or fully in the time domain. Such an arrangement allows the terminal 20 to efficiently identify a MsgA-PO having a corresponding relationship with a MsgA-RO to be used, by invalidating one of the MsgA-RO or the MsgA-PO when the MsgA-RO and the MsgA-PO overlap with each other in the time domain.

Embodiments of the present invention also provide a communication method including: a terminal performing a control procedure identifying a first transmission occasion for transmitting a message used for a two-step random access procedure in a physical random access channel and a second transmission occasion for transmitting the message in a physical uplink shared channel; and a transmission procedure for transmitting the message using the first transmission occasion and the second transmission occasion, wherein the control procedure changes a method for identifying the second transmission occasion when the first transmission occasion is invalidated.

With the above configuration, when a MsgA-RO is invalidated, the terminal 20 can efficiently identify a MsgA-PO having a corresponding relationship with a MsgA-RO to be used, by invalidating the MsgA-PO. When a MsgA-RO is invalidated, the terminal 20 can efficiently identify a MsgA-PO having a corresponding relationship with another MsgA-RO, by excluding the MsgA-RO. When a MsgA-RO is invalidated, the terminal 20 may invalidate a MsgA-PRACH slot containing the MsgA-RO so that a MsgA-PUSCH slot is not specified by a time offset from the MsgA-PRACH slot. That is, in a wireless communication system, the resources used for the two-step random access procedure can be determined.

### (Supplement to Embodiments)

Thus, although embodiments of the present invention have been described, the disclosed invention is not limited to such embodiments, and various modifications, modifications, alternatives, substitutions and the like will be understood by those skilled in the art. Specific numerical examples have been used to facilitate understanding of the invention, but unless otherwise indicated, they are merely examples and any appropriate values may be used. Classification of items in the above description is not essential to the present invention, and the items described in two or more items may be used in combination as needed, or the items described in one item may be applied to the items described in another item (unless there is a conflict). The functional or processing unit boundaries in the functional block diagram do not necessarily correspond to the physical part boundaries. The operation of the plurality of functions may be performed physically by one component, or the operation of one function may be performed physically by the plurality of components. As for the processing procedure described in the embodiment, the order of the processing may be changed unless there is no conflict. For convenience of process description, the base station 10 and terminal 20 have been described using a functional block diagram, but such devices may be implemented in hardware, software, or a combination thereof. Software operated by a processor of the base station 10 in accordance with embodiments of the present invention and software operated by a processor of the terminal 20 in accordance with embodiments of the present invention may be stored in random access memory (RAM), flash memory, read only memory (ROM), EPROM, EEPROM, register, hard disk (HDD), removable disk, CD-ROM, database, server, or any other suitable storage medium.

Information may be also communicated in other ways, as well as in the manner/embodiments described in this disclosure. For example, indication of information may be performed by physical layer signaling (for example, DCI (Downlink Control Information), UCI (Uplink Control Information), upper layer signaling (for example, RRC (Radio Resource Control) signaling, MAC (Medium Access Control) signaling, MIB (Master Information Block), SIB (System Information Block), other signals, or a combination thereof. The RRC signaling may be referred to as an RRC message, and may be, for example, an RRC Connection Setup message, an RRC Connection Reconfiguration message, and the like.

Each aspect/embodiment described in this disclosure is as follows: LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000 UMB (Ultra Mobile Broadband), IEEE 802.11 (Wi-Fi), IEEE 802.16 (WiMAX), IEEE 802.20 (Ultra-WideBand), Bluetooth (Registered), It may be applied to at least one of the systems utilizing other appropriate systems and the next generation systems extended thereon. Multiple systems may also be applied in combination (e.g., at least one of LTE and LTE-A combined with 5G, and the like).

The processing procedures, sequences, flowcharts, etc. of each aspect/embodiment described herein may be reordered unless there is any conflict. For example, the methods described in the present disclosure are presented using exemplary sequences to present elements of the various steps and are not limited to the particular order presented.

The specific operations described herein as performed by the base station 10 may be performed by its upper node in some cases. In a network of one or more network nodes having a base station 10, it will be apparent that various operations performed for communication with terminal 20 may be performed by at least one of the base station 10 and other network nodes other than base station 10 (for example, but not limited to MME, S-GW, and the like). Although the above illustrates that there is only one other network node other than the base station 10, the other network nodes may be a combination of multiple other network nodes (for example, MME and S-GW).

The information or signals described in this disclosure can be output from a higher layer (or lower layer) to a lower layer (or higher layer). It may be input and output through multiple network nodes.

Input and output information may be stored in a specific location (for example, memory) or managed using management tables. The input and output information may be overwritten, updated, or added. The output information may be deleted. The input information or the like may be transmitted to another device.

The determination in this disclosure may be made by a value (0 or 1) expressed in 1 bit, by a true or false value (Boolean: true or false), or by a numerical comparison (for example, a comparison with a predetermined value).

Software should be broadly interpreted to mean, whether referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, and the like.

Software, instructions, information, and the like may also be transmitted and received via a transmission medium. For example, when software is transmitted from a website, server, or other remote source using at least one of wireline technology (such as coaxial cable, fiber optic cable, twisted pair, digital subscriber line) and wireless technology (infrared, microwave, and the like), at least one of these wireline technology and wireless technology is included within the definition of a transmission medium.

The information, signals and the like described in this disclosure may be represented using any of a variety of different techniques. For example, data, instructions, commands, information, signals, bits, symbols, chips, and the like, which may be referred to throughout the above description, may be represented by voltages, currents, electromagnetic waves, magnetic fields or magnetic particles, optical fields or photons, or any combination thereof.

The terms described in this disclosure and those necessary for understanding this disclosure may be replaced by terms having the same or similar meanings. For example, at least one of the channels and the symbols may be a signal (signaling). The signal may also be a message. The component carrier may also be referred to as a carrier frequency, cell, frequency carrier, or the like.

As used in this disclosure, the terms "system" and "network" are used interchangeably.

The information, parameters, and the like described in the present disclosure may also be expressed using absolute values, relative values from predetermined values, or they may be expressed using corresponding separate information. For example, the wireless resources may be those indicated by an index.

The name used for the parameters described above is not restrictive in any respect. In addition, the mathematical equations using these parameters may differ from those explicitly disclosed in this disclosure. Because the various channels (for example, PUCCH, PDCCH, and the like) and information elements can be identified by any suitable name, the various names assigned to these various channels and information elements are not limited names in any respect.

In this disclosure, the terms "Base Station", "Wireless Communication Base Station", "Base Station Device", "Fixed Station", "NodeB", "eNodeB", "gNodeB", "Access Point", "Transmission Point", "Receiving Point", "Transmission/Reception Point", "Cell", "Sector", "Cell Group", "Carrier", "Component Carrier" and the like may be used interchangeably, and may be referred to in terms such as macrocells, small cells, femtocells, picocells and the like.

The base station can accommodate one or more (for example, three) cells. Where the base station accommodates a plurality of cells, the entire coverage area of the base station can be divided into a plurality of smaller areas, each smaller area can also provide communication services by means of a base station subsystem (for example, an indoor small base station (RRH) or a remote Radio Head), and the term "cell" or "sector" refers to a portion or all of the coverage area of at least one of the base station and base station subsystem that provides communication services at the coverage.

In this disclosure, terms such as "mobile station", "user terminal", "user equipment", "terminal", and the like may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base stations and the mobile station may be referred to as a transmitter, receiver, communication device, or the like. At least one of the base station and the mobile station may be a device mounted on the mobile body, a mobile body, or the like. The mobile may be a vehicle (for example, a car, an airplane, and the like), an unmanned mobile (for example, a drone, an automated vehicle, and the like), or a robot (manned or unmanned). At least one of the base station and the mobile station includes a device that does not necessarily move during communication operations. For example, at least one of the base station and the mobile station may be an IoT (Internet of Things) device such as a sensor.

In addition, the base station in the present disclosure may be read by the user terminal. For example, various aspects/embodiments of the present disclosure may be applied for a configuration in which communication between base stations and user terminals is replaced by communication between multiple terminals 20 (for example, may be referred to as D2D (Device-to-Device), V2X (Vehicle-to-Everything), etc.). In this case, the terminal 20 may have the functions provided by the base station 10 described above. The phrases "upstream" and "downstream" may also be replaced by the phrases corresponding to terminal-to-terminal communication (for example, "side"). For example, an upstream channel, a downstream channel, or the like may be read by a side channel.

Similarly, the user terminal in the present disclosure may be read by the base station. In this case, the base station may have the functions provided by the user terminal described above.

As used in this disclosure, the terms "determination (determining)" and "decision (determining)" may encompass a wide variety of operations. "Judgment" includes, for example, judging, calculating, computing, processing, deriving, investigating, looking up, searching, investigating (for example, searching in tables, databases, or other data structures), ascertaining, and so forth. "Judgment" and "decision" may also include receiving (for example, receiving information), transmitting (for example, sending information), input, output, and accessing (for example, accessing data in memory) as "judged" and "determined", and the like. "Judgment" and "decision" may also include "judgment" and "decision" regarding matters such as resolving, selecting, choosing, establishing, comparing, etc. That is, the "judgment" and the "decision" may include deeming some action to be "judgment" and "determination." "Decision" may be read as "Assuming," "Expected," or "Considering," and the like.

The term "connected" or "coupled" or any variation thereof means any direct or indirect connection or connection between two or more elements and may include the presence of one or more intermediate elements between two elements "connected" or "coupled" with each other. The coupling or connection between the elements may be physical, logical, or a combination of these. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS (Reference Signal) or may be referred to as a pilot, depending on the standards applied.

As used in this disclosure, the expression "based on" does not mean "solely" unless otherwise specified. In other words, the expression "based on" means both "solely" and "at least based on".

Any reference to an element using a designation such as "first" or "second" as used in the present disclosure does not generally limit the amount or order of those elements. These designations can be used in the present disclosure as a convenient way to distinguish between two or more elements. Thus, references to the first and second elements do not imply that only two elements may be employed or that the first element must in some way precede the second element.

"Means" in the configuration of each of the above devices may be replaced by "parts," "circuits," "devices," and the like.

When the terms "include", "including" and variations thereof are used in the present disclosure, these terms are intended to be comprehensive as well as the term "comprising". Moreover, the term "or" as used in this disclosure is not intended to be an exclusive-OR.

The wireless frame may consist of one or more frames in the time domain. Each frame or frames in the time domain may be referred to as subframes. The subframe may further comprise one or more slots in the time domain. The subframe may be a fixed length of time (for example, 1 ms) independent of the numerology.

The numerology may be a communication parameter that is applied to at least one of the transmission and reception of a signal or channel. The numerology may indicate at least one of, for example, subCarrier Spacing (SCS), bandwidth, symbol length, cyclic prefix length, transmission time interval (TTI), number of symbols per TTI, wireless frame configuration, certain filtering processing performed by the transceiver in the frequency domain, and specific windowing processing performed by the transceiver in the time domain.

The slot may consist of one or more symbols in the time domain, such as OFDM (Orthogonal Frequency Division Multiplexing) symbols, SC-FDMA (Single Carrier Frequency Division Multiple Access symbols, and the like. The slot may be in time units based on a numerology.

The slots may include a plurality of minislots. Each minislot may be comprised of one or more symbols in the time domain. The minislot may also be referred to as a subslot. The minislots may consist of fewer symbols than the slots. A PDSCH (or PUSCH) transmitted in time units greater than a minislot may be called a PDSCH (or PUSCH) mapping type A. PDSCH (or PUSCH) transmitted using minislots may be referred to as PDSCH (or PUSCH) mapping type B.

Radio frames, subframes, slots, minislots and symbols all represent time units for transmitting signals. Radio frames, subframes, slots, minislots and symbols, respectively, may be designated separately.

For example, one subframe may be referred to as a Transmission Time Interval (TTI), multiple consecutive subframes may be referred to as a TTI, and one slot or one minislot may be referred to as a TTI. That is, at least one of the subframes and the TTI may be a subframe (1 ms) in an existing LTE, a period shorter than 1 ms (e.g., 1-13 symbols), or a period longer than 1 ms. The unit representing the TTI may be referred to as a slot, a minislot, or the like, rather than a subframe.

The TTI refers, for example, to the minimum time unit for scheduling in wireless communication. For example, in an LTE system, a base station schedules each terminal 20 to allocate wireless resources (such as frequency bandwidth, transmit power, and the like that can be used in each terminal 20) in TTI units. The definition of TTI is not limited to this.

The TTI may be a transmission time unit, such as a channel-encoded data packet (transport block), code block, codeword, or the like, or may be a processing unit, such as a scheduling or link adaptation. When a TTI is provided, the time interval (e.g., the number of symbols) during which the transport block, code block, codeword, or the like is actually mapped may be shorter than the TTI.

If one slot or one minislot is referred to as a TTI, one or more TTIs (that is, one or more slots or one or more minislots) may be the minimum time unit for scheduling. The number of slots (minislots) constituting the minimum time unit of the scheduling may also be controlled.

A TTI having a time length of 1 ms may be referred to as a TTI (usually a TTI in LTE Rel. 8-12), a normal TTI, a long TTI, a normal subframe, a normal subframe, a long subframe, a slot, and the like. A TTI that is typically shorter than a TTI may be referred to as a shortened TTI, a short TTI, a partial TTI (partial or fractional TTI), a shortened subframe, a short subframe, a minislot, a subslot, a slot, or the like.

The long TTI (for example, usually TTI, subframe, and the like) may be interpreted as a TTI having a time length exceeding 1 ms, and the short TTI (for example, shortened TTI, and the like) may be interpreted as a TTI having a TTI length less than the TTI length of the long TTI and a TTI length greater than 1 ms.

Resource blocks (RBs) are time domain and frequency domain resource allocation units and may include one or more consecutive subcarriers in the frequency domain. The number of subcarriers included in the RB may be the same, regardless of the numerology, for example 12. The number of subcarriers included in the RB may be determined on the basis of numerology.

The time domain of the RB may also include one or more symbols, which may be 1 slot, 1 minislot, 1 subframe, or 1 TTI in length. One TTI, one subframe, and the like, may each consist of one or more resource blocks.

Note that one or more RBs may be referred to as physical resource blocks (PRBs), sub-carrier groups (SCGs), resource element groups (REGs), PRB pairs, RB pairs, and the like.

Resource blocks may also consist of one or more resource elements (RE). For example, 1 RE may be a wireless resource area of one sub-carrier and one symbol.

The bandwidth portion (which may also be referred to as a partial bandwidth, and the like) may represent a subset of consecutive common RB (common resource blocks) for a given numerology in a carrier. Here, the common RB may be identified by an index of RB relative to the common reference point of the carrier. A PRB is defined in a BWP and may be numbered within that BWP.

BWP may include BWP for UL (UL BWP) and BWP for DL (DL BWP). For a UE, one or more BWPs may be configured in one carrier.

At least one of the configured BWPs may be active, and the UE need not assume that it will send and receive predetermined signals/channels outside of the active BWP. The terms "cell" and "carrier" in this disclosure may be replaced by "BWP."

Structures such as radio frames, subframes, slots, minislots, and symbols described above are exemplary only. For example, the number of subframes included in a wireless frame, the number of slots per subframe or wireless frame, the number of minislots included in the slot, the number of symbols and RBs included in the slot or minislot, the number of subcarriers included in the RB, the number of symbols in the TTI, the symbol length, the length of the cyclic prefix (CP) length, and the like may vary.

In the present disclosure, where an article is added by translation, for example a, an, and the English language, the disclosure may include that the noun following these articles is plural.

In this disclosure, the term "A and B are different" may mean "A and B are different from each other." Incidentally, the term may mean "A and B are different from C." Terms such as "separated" or "combined" may be interpreted as well as "different".

The aspects/embodiments described in this disclosure may be used alone, in combination, or switched with implementation. Notice of a given information (for example, "X" notice) may also be given by implication (for example, "no notice of the given information"), not explicitly.

In the present disclosure, MsgA is an example of a message used in a two-step random access procedure. PRACH is an example of a physical random access channel. PUSCH is an example of a physical uplink shared channel. MsgA-RO is an example of the first transmission occasion. MsgA-PO is an example of the second transmission occasion.

While the present disclosure has been described in detail above, those skilled in the art will appreciate that the present disclosure is not limited to the embodiments described in the present disclosure.

### DESCRIPTION OF THE REFERENCE NUMERALS

10 base station
110 transmission unit
120 receiving unit
130 setting unit
140 control unit
20 terminal
210 transmission unit
220 receiving unit
230 setting unit
240 control unit
1001 processor
1002 storage device
1003 auxiliary storage device
1004 communication device
1005 input device
1006 output device

## Claims

1. A terminal (20) comprising:
a control unit (240) configured to
determine a corresponding relationship between a random access preamble transmission occasion and an uplink channel data transmission occasion, and
determine the uplink channel data transmission occasion, which does not overlap with the random access preamble transmission occasion in a time domain and a frequency domain, as a valid transmission occasion, in a two-step random access procedure; and
a transmission unit (210) configured to transmit a message including the random access preamble and the uplink channel data to a base station using the determined random access preamble transmission occasion and uplink channel data transmission occasion.

2. The terminal (20) as claimed in claim 1,
wherein the transmission unit (210) does not transmit the uplink channel data using the uplink channel data transmission occasion whose corresponding relationship with the valid transmission occasion is not determined.

3. A base station (10) comprising:
a control unit (140) configured to
determine a corresponding relationship between a random access preamble transmission occasion and an uplink channel data transmission occasion, and
determine the uplink channel data transmission occasion, which does not overlap with the random access preamble transmission occasion in a time domain and a frequency domain, as a valid transmission occasion, in a two-step random access procedure; and
a reception unit (120) configured to receive a message including the random access preamble and the uplink channel data from a terminal using the determined random access preamble transmission occasion and uplink channel data transmission occasion.

4. A communication system comprising
a terminal (20) including:
a control unit (240) configured to
determine a corresponding relationship between a random access preamble transmission occasion and an uplink channel data transmission occasion, and
determine the uplink channel data transmission occasion, which does not overlap with the random access preamble transmission occasion in a time domain and a frequency domain, as a valid transmission occasion, in a two-step random access procedure; and
a transmission unit (210) configured to transmit a message including the random access preamble and the uplink channel data to a base station using the determined random access preamble transmission occasion and uplink channel data transmission occasion, and
a base station (10) including:
a control unit (140) configured to
determine a corresponding relationship between a random access preamble transmission occasion and an uplink channel data transmission occasion, and
determine the uplink channel data transmission occasion, which does not overlap with the random access preamble transmission occasion in a time domain and a frequency domain, as a valid transmission occasion, in a two-step random access procedure; and
a reception unit (120) configured to receive a message including the random access preamble and the uplink channel data from a terminal using the determined random access preamble transmission occasion and uplink channel data transmission occasion.

5. A communication method of a terminal (10), the communication method comprising:
determining a corresponding relationship between a random access preamble transmission occasion and an uplink channel data transmission occasion;
determining the uplink channel data transmission occasion, which does not overlap with the random access preamble transmission occasion in a time domain and a frequency domain, as a valid transmission occasion, in a two-step random access procedure; and
transmitting a message including the random access preamble and the uplink channel data to a base station using the determined random access preamble transmission occasion and uplink channel data transmission occasion.

## Patentansprüche

1. Endgerät (20), umfassend:
eine Steuereinheit (240), die dazu konfiguriert ist, um
eine entsprechende Beziehung zwischen einem Zufallszugriffspräambel-Übertragungsereignis und einem Uplinkkanaldaten-Übertragungsereignis zu bestimmen, und
das Uplinkkanaldaten-Übertragungsereignis zu bestimmen, das sich in einem Zeit- und Frequenzbereich nicht mit dem Zufallszugriffspräambel-Übertragungsereignis überschneidet und als gültiges Übertragungsereignis in einem zweistufigen Zufallszugriffsverfahren dient; und
eine Übertragungseinheit (210), die dazu konfiguriert ist, um eine Nachricht zu übertragen, die die Zufallszugriffspräambel und die Uplinkkanaldaten an eine Basisstation unter Verwendung des bestimmten Zufallszugriffspräambel-Übertragungsereignisses und des Uplinkkanaldaten-Übertragungsereignisses einschließt.

2. Endgerät (20) nach Anspruch 1,
wobei die Übertragungseinheit (210) die Uplinkkanaldaten nicht über das Uplinkkanaldaten-Übertragungsereignis überträgt, dessen entsprechende Beziehung zum gültigen Übertragungsereignis nicht festgelegt ist.

3. Basisstation (10), umfassend:
eine Steuereinheit (140), die dazu konfiguriert ist, um
eine entsprechende Beziehung zwischen einem Zufallszugriffspräambel-Übertragungsereignis und einem Uplinkkanaldaten-Übertragungsereignis zu bestimmen, und
das Uplinkkanaldaten-Übertragungsereignis zu bestimmen, das sich in einem Zeit- und Frequenzbereich nicht mit dem Zufallszugriffspräambel-Übertragungsereignis überschneidet und als gültiges Übertragungsereignis in einem zweistufigen Zufallszugriffsverfahren dient; und
eine Empfangseinheit (120), die dazu konfiguriert ist, um eine Nachricht zu empfangen, die die Zufallszugriffspräambel und die Uplinkkanaldaten von einem Endgerät unter Verwendung des festgelegten Zufallszugriffspräambel-Übertragungsereignisses und des Uplinkkanaldaten-Übertragungsereignisses einschließt.

4. Kommunikationssystem, umfassend
ein Endgerät (20), das Folgendes einschließt:
eine Steuereinheit (240), die dazu konfiguriert ist, um
eine entsprechende Beziehung zwischen einem Zufallszugriffspräambel-Übertragungsereignis und einem Uplinkkanaldaten-Übertragungsereignis zu bestimmen, und
das Uplinkkanaldaten-Übertragungsereignis zu bestimmen, das sich in einem Zeit- und Frequenzbereich nicht mit dem Zufallszugriffspräambel-Übertragungsereignis überschneidet und als gültiges Übertragungsereignis in einem zweistufigen Zufallszugriffsverfahren dient; und
eine Übertragungseinheit (210), die dazu konfiguriert ist, um eine Nachricht zu übertragen, die die Zufallszugriffspräambel und die Uplinkkanaldaten an eine Basisstation unter Verwendung des bestimmten Zufallszugriffspräambel-Übertragungsereignisses und des Uplinkkanaldaten-Übertragungsereignisses, und
eine Basisstation (10), die Folgendes einschließt:
eine Steuereinheit (140), die dazu konfiguriert ist, um
eine entsprechende Beziehung zwischen einem Zufallszugriffspräambel-Übertragungsereignis und einem Uplinkkanaldaten-Übertragungsereignis zu bestimmen, und
das Uplinkkanaldaten-Übertragungsereignis zu bestimmen, das sich in einem Zeit- und Frequenzbereich nicht mit dem Zufallszugriffspräambel-Übertragungsereignis überschneidet und als gültiges Übertragungsereignis in einem zweistufigen Zufallszugriffsverfahren dient; und
eine Empfangseinheit (120), die dazu konfiguriert ist, um eine Nachricht zu empfangen, die die Zufallszugriffspräambel und die Uplinkkanaldaten von einem Endgerät unter Verwendung des festgelegten Zufallszugriffspräambel-Übertragungsereignisses und des Uplinkkanaldaten-Übertragungsereignisses einschließt.

5. Kommunikationsverfahren eines Endgeräts (10), das Kommunikationsverfahren umfassend:
Bestimmen einer entsprechenden Beziehung zwischen einem Zufallszugriffspräambel-Übertragungsereignis und einem Uplinkkanaldaten-Übertragungsereignis;
Bestimmen des Uplinkkanaldaten-Übertragungsereignisses, das sich in einem Zeit- und Frequenzbereich nicht mit dem Zufallszugriffspräambel-Übertragungsereignis überschneidet und als gültiges Übertragungsereignis in einem zweistufigen Zufallszugriffsverfahren gilt; und
Übertragen einer Nachricht, die die Zufallszugriffspräambel und die Uplinkkanaldaten an eine Basisstation einschließt, unter Verwendung des bestimmten Zufallszugriffspräambel-Übertragungsereignisses und des Uplinkkanaldaten-Übertragungsereignisses.

## Revendications

1. Terminal (20) comprenant :
une unité (240) de contrôle configurée pour
déterminer une relation correspondante entre une occasion de transmission de préambule d'accès aléatoire et une occasion de transmission de données de canal montant, et
déterminer l'occasion de transmission de données de canal montant, qui ne chevauche pas l'occasion de transmission de préambule d'accès aléatoire dans un domaine temporel et un domaine fréquentiel, en tant qu'occasion de transmission valide, dans une procédure d'accès aléatoire en deux étapes ; et
une unité (210) de transmission configurée pour transmettre un message incluant le préambule d'accès aléatoire et les données de canal montant à une station de base en utilisant les occasions de transmission de préambule d'accès aléatoire et occasion de transmission de données de canal montant déterminées.

2. Terminal (20) selon la revendication 1,
dans lequel l'unité (210) de transmission ne transmet pas les données de canal montant en utilisant l'occasion de transmission de données de canal montant dont la relation correspondante avec l'occasion de transmission valide n'est pas déterminée.

3. Station (10) de base comprenant :
une unité (140) de contrôle configurée pour
déterminer une relation correspondante entre une occasion de transmission de préambule d'accès aléatoire et une occasion de transmission de données de canal montant, et
déterminer l'occasion de transmission de données de canal montant, qui ne chevauche pas l'occasion de transmission de préambule d'accès aléatoire dans un domaine temporel et un domaine fréquentiel, en tant qu'occasion de transmission valide, dans une procédure d'accès aléatoire en deux étapes ; et
une unité (120) de réception configurée pour recevoir un message incluant le préambule d'accès aléatoire et les données de canal montant à partir d'un terminal en utilisant les occasions de transmission de préambule d'accès aléatoire déterminée et occasion de transmission de données de canal montant.

4. Système de communication comprenant
un terminal (20) incluant :
une unité (240) de contrôle configurée pour
déterminer une relation correspondante entre une occasion de transmission de préambule d'accès aléatoire et une occasion de transmission de données de canal montant, et
déterminer l'occasion de transmission de données de canal montant, qui ne chevauche pas l'occasion de transmission de préambule d'accès aléatoire dans un domaine temporel et un domaine fréquentiel, en tant qu'occasion de transmission valide, dans une procédure d'accès aléatoire en deux étapes ; et
une unité (210) de transmission configurée pour transmettre un message incluant le préambule d'accès aléatoire et les données de canal montant à une station de base en utilisant les occasions de transmission de préambule d'accès aléatoire et occasion de transmission de données de canal montant déterminées, et
une station (10) de base incluant :
une unité (140) de contrôle configurée pour
déterminer une relation correspondante entre une occasion de transmission de préambule d'accès aléatoire et une occasion de transmission de données de canal montant, et
déterminer l'occasion de transmission de données de canal montant, qui ne chevauche pas l'occasion de transmission de préambule d'accès aléatoire dans un domaine temporel et un domaine fréquentiel, en tant qu'occasion de transmission valide, dans une procédure d'accès aléatoire en deux étapes ; et
une unité (120) de réception configurée pour recevoir un message incluant le préambule d'accès aléatoire et les données de canal montant à partir d'un terminal en utilisant les occasions de transmission de préambule d'accès aléatoire déterminée et occasion de transmission de données de canal montant.

5. Procédé de communication d'un terminal (10), le procédé de communication comprenant :
la détermination d'une relation correspondante entre une occasion de transmission de préambule d'accès aléatoire et une occasion de transmission de données de canal montant ;
la détermination de l'occasion de transmission de données de canal montant, qui ne chevauche pas l'occasion de transmission de préambule d'accès aléatoire dans un domaine temporel et un domaine fréquentiel, en tant qu'occasion de transmission valide, dans une procédure d'accès aléatoire en deux étapes ; et
la transmission d'un message incluant le préambule d'accès aléatoire et les données de canal montant à une station de base en utilisant les occasions de transmission de préambule d'accès aléatoire et occasion de transmission de données de canal montant déterminées.
